# EUROPEAN PATENT SPECIFICATION

(11) **EP 3 547 080 B1**
(45) Date of publication and mention of the grant of the patent: **24.01.2024**
(21) Application number: 18164245.5
(22) Date of filing: 27.03.2018
(51) Int. Cl.: G06F 3/01, G06F 3/0481, G06T 19/00, G06F 3/04815

(54) **RENDERING ANCHORED OBJECTS IN A SCENE**
WIEDERGABE VERANKERTER OBJEKTE IN EINER SZENE
RENDU D'OBJETS ANCRÉS DANS UNE SCÈNE

(43) Date of publication of application: 02.10.2019
(73) Proprietor: Nokia Technologies Oy, 02610 Espoo (FI)
(72) Inventor: MATE, Sujeet Shyamsundar, 33720 Tampere (FI); LAAKSONEN, Lasse Juhani, 33210 Tampere (FI); LEHTINIEMI, Arto Juhani, 33880 Lempäälä (FI); VILERMO, Miikka Tapani, 37200 Siuro (FI)
(74) Representative: Whiting, Gary

(56) References cited:
- EP-A1- 3 137 976

## Description

### Field

The present specification relates to rendering anchored virtual objects in a virtual reality, augmented reality or mixed reality scene.

### Background

Virtual reality (VR) is a rapidly developing area of technology in which video content is provided to a VR display system. As is known, a VR display system may be provided with a live or stored feed from a video content source, the feed representing a VR space or world for immersive output through the display system. In some embodiments, audio is provided, which may be spatial audio. A VR headset may be configured to provide VR video and audio content to the user, e.g. through the use of a pair of video screens and headphones incorporated within the headset.

Mixed reality (MR) is an area of technology in which real and virtual worlds are combined such that physical and digital objects co-exist and interact in real time. Augmented reality (AR) refers to a real-world view that is augmented by computer-generated sensory input. In the context of the present specification, the term mixed reality is intended to encompass augmented reality.

Immersive content may be provided, for example, in virtual reality, augmented reality or mixed reality scenes. The presentation of such data to a viewer relies on tracking the position of that viewer. Suitable tracking systems with full tracking functionality are not available everywhere and may not be functioning at all times.

EP 3137976 discloses embodiments that relate to communicating to a user of a head-mounted display device an estimated quality level of a world-lock display mode are disclosed. For example, in one disclosed embodiment a sensor data is received from one or more sensors of the device. Using the sensor data, an estimated pose of the device is determined. Using the estimated pose, one or more virtual objects are displayed via the device in either the world-lock display mode or in a body-lock display mode. One or more of input uncertainty values of the sensor data and pose uncertainty values of the estimated pose are determined. The input uncertainty values and/or pose uncertainty values are mapped to the estimated quality level of the world-lock display mode. Feedback of the estimated quality level is communicated to a user via device.

### Summary

The invention is defined according to independent claim 1 claiming a head mounted computing apparatus, independent claim 8 claiming a computer-implemented method performed by a head mounted computing apparatus according to claim 1 and independent claim 15 claiming computer-readable instructions which, when executed by a head mounted computing apparatus according to claim 1 to perform a method according to claim 8.

In a first aspect, this specification describes a head mounted computing apparatus for presenting virtual reality, mixed reality, or augmented reality content, the apparatus comprising: means for rendering, to a user, one or more anchored virtual objects within a scene, wherein, in a coarse mode of operation, at least some of the anchored virtual objects are rendered at an estimated position for that object and with limited audio and/or visual attributes and, in an accurate mode of operation, the at least some anchored virtual objects are rendered at a determined position for that object and with full audio and/or visual attributes, wherein determined positions are generally more accurate or known with more confidence than estimated positions; and means for transitioning from the coarse mode of operation to the accurate mode of operation, including moving the at least some anchored objects from the respective estimated positions to the respective determined positions and transitioning the at least some anchored virtual objects from objects having limited audio and/or visual attributes to objects having full audio and/or visual attributes, where the transition between coarse and accurate modes of operation is triggered by a change in a mechanism by which the user position is determined, wherein the scene is a virtual reality, augmented reality or mixed reality scene.

Each anchored virtual object may be associated with a feature within the scene.

In some forms of the invention, moving the at least some anchored virtual objects from the respective estimated positions to the respective determined positions may be implemented gradually. Alternatively, or in addition, transitioning the at least some anchored virtual objects from objects having limited audio and/or visual attributes to objects having full audio and/or visual attributes may be implemented gradually.

Limited audio and/or visual attributes may include one or more of: partially transparent visual rendering, ripple effect visual rendering, non-directional audio rendering and limited colour visual rendering.

Full audio and visual attributes may include one or more of: full colour visual rendering, full texture visual rendering, full opacity visual rendering and spatial audio rendering.

The apparatus may further comprise means for manually adjusting positions of one or more of said one or more anchored virtual objects.

The apparatus may further comprise means for rendering one or more unanchored virtual objects within the scene, wherein in the coarse mode of operation, at least some of the unanchored virtual objects may be rendered at an estimated position for the respective object and, in an accurate mode of operation, the at least some anchored virtual objects may be rendered at a determined position for the respective object. The unanchored virtual objects may be rendered with full audio and/or visual attributes in both the coarse and accurate modes of operation.

In the first aspect, the said means may comprise at least one processor and at least one memory including computer program code, the at least one memory and computer program code configured to, with the at least one processor, cause the performance of the apparatus according to the first aspect.

In a second aspect, this specification describes a computer-implemented method performed by an apparatus according to the first aspect, the method comprising: rendering one or more anchored virtual objects within a scene, wherein, in a coarse mode of operation, at least some of the anchored virtual objects are rendered at an estimated position for that object and with limited audio and/or visual attributes and, in an accurate mode of operation, the at least some anchored objects are rendered at a determined position for that object and with full audio and/or visual attributes, wherein determined positions are generally more accurate or known with more confidence than estimated positions; and transitioning from the coarse mode of operation to the accurate mode of operation, including moving the at least some anchored virtual objects from the respective estimated positions to the respective determined positions and transitioning the at least some anchored virtual objects from objects having limited audio and/or visual attributes to objects having full audio and/or visual attributes, wherein the scene is a virtual reality, augmented reality or mixed reality scene.

Moving the at least some anchored virtual objects from the respective estimated positions to the respective determined positions may be implemented gradually. Alternatively, or in addition, transitioning the at least some anchored virtual objects from objects having limited audio and/or visual attributes to objects having full audio and/or visual attributes may be implemented gradually.

The method may further comprise transitioning from the accurate mode of operation to the coarse mode of operation. The method may comprise gradually moving the anchored virtual objects from the respective determined positions to the respective estimated positions. The method may comprise gradually transitioning the anchored virtual objects from objects having full audio and/or visual attributes to objects having limited audio and/or visual attributes.

The method may further comprise manually adjusting positions of one or more of said one or more anchored virtual objects.

The method may further comprise rendering one or more unanchored virtual objects within the scene, wherein in the coarse mode of operation, at least some of the unanchored virtual objects are rendered at an estimated position for the respective object and, in an accurate mode of operation, the at least some unanchored virtual objects are rendered at a determined position for the respective object. The unanchored virtual objects may be rendered with full audio and/or visual attributes in both the coarse and accurate modes of operation.

In some forms of the invention, position data in the coarse mode of operation may be obtained from a global positioning system positioning system, a wi-fi based positioning system and/or a three degrees-of-freedom based positioning system.

In some forms of the invention, position data in the accurate mode of operation may be obtained from a head-mounted device based positioning system, an augmented reality glasses based positioning system and/or a six degrees-of-freedom based positioning system.

In a third aspect, this specification describes computer-readable instructions which, when executed by the computing apparatus according to the first aspect, cause the computing apparatus to perform a method as described with reference to the second aspect.

### Brief description of the drawings

Example embodiments are described herein, by way of non-limiting examples, with reference to the following schematic drawings, in which:
FIG. 1 is a plan view showing areas in which aspects of an example embodiment may be used;
FIG. 2 is a schematic representation of an example use of an embodiment;
FIG. 3 is a schematic view of a headset for displaying visual data in accordance with an example embodiment;
FIG. 4 is a flow chart showing an algorithm in accordance with an example embodiment;
FIG. 5 is a block diagram of a scene in accordance with an example embodiment;
FIG. 6 shows a representation of the scene of FIG. 5 in accordance with an example embodiment;
FIGS. 7a to 7c show example outputs in accordance with an example embodiment;
FIG. 8 is a flow chart showing an algorithm in accordance with an example embodiment;
FIGS. 9a and 9b show example outputs in accordance with an example embodiment;
FIG. 10 is a block diagram in accordance with an example embodiment;
FIGS. 11a and 11b show tangible media, respectively a removable memory unit and a compact disc (CD) storing computer-readable code which when run by a computer perform operations according to embodiments.

### Detailed description

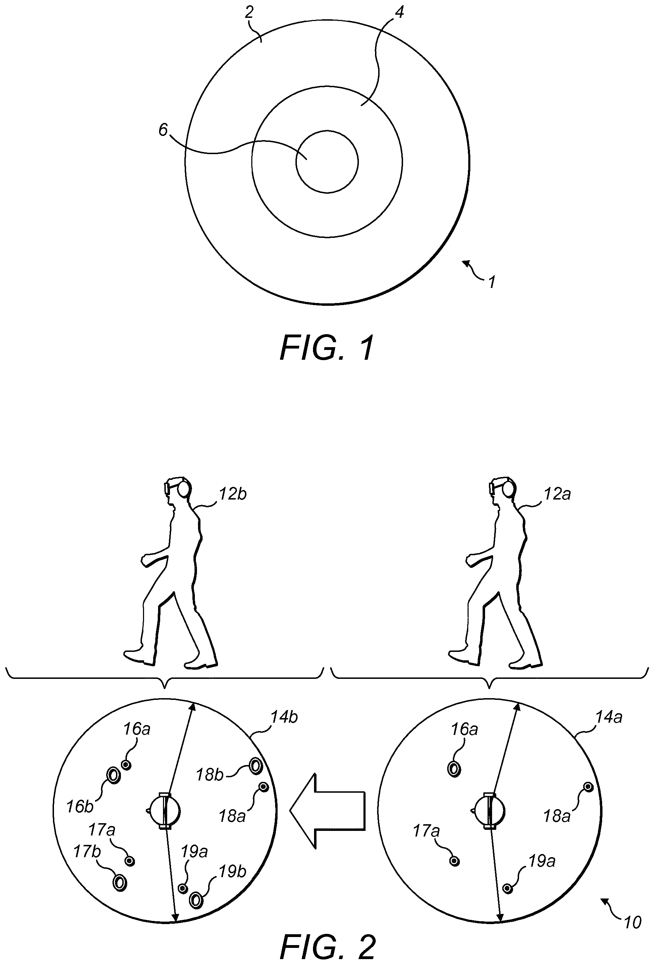

FIG. 1 is a plan view, indicated generally by the reference numeral 1, showing areas in which aspects of an example embodiment may be used. The plan view 1 includes a first zone 2, a second zone 4 and a third zone 6. A user (not shown in FIG. 1) may move between the zones 2, 4 and 6. It should be noted that whilst the zones shown in FIG. 1 are circular, this is not essential. The zones could have a different shape. Furthermore, the shape of one or more of the zones could be different to the shapes of others.

As described further below, a scene (such as a virtual reality, augmented reality or mixed reality scene presented to the user) may be rendered to the user in a manner dependent on the zone in which the user is located. For example, when the user is within the first zone 2, the scene may not be available to the user. When the user is within the second zone 4, the scene may be available for rendering in a coarse mode of operation. When the user in within the third zone 6, the scene may be available for rendering in an accurate mode of operation.

FIG. 2 is a schematic representation, indicated generally by the reference numeral 10, of an example use of an embodiment. In FIG. 2, a user 12 can move between a zone (similar to the second zone 4) in which a scene is available for rendering in a coarse mode of operation and a zone (similar to the third zone 6) in which a scene is available for rendering in an accurate mode of operation.

FIG. 2 shows the user, indicated by the reference numeral 12a, in a zone in which a scene (indicated by the reference numeral 14a) is available for rendering to the user 12a in a coarse mode of operation. The scene 14a includes a first, second, third and fourth objects, which are rendered at first to fourth estimated positions 16a to 19a respectively within the scene 14a.

Similarly, FIG. 2 shows the user, indicated by the reference numeral 12b, in a zone in which the scene (indicated by the reference numeral 14b) is available for rendering to the user 12b in an accurate mode of operation. The scene 12b includes the same objects as the scene 12a described above, but now the positions of the objects are based on a determined position. For ease of reference, the determined positions of the first to fourth objects rendered in the scene 14b are given the reference numerals 16b to 19b respectively. The scene 14b shown in FIG. 2 shows the first to fourth objects in the estimated positions 16a to 19a and the determined positions 16b to 19b. As shown in FIG. 2, each of the determined positions 16b to 19b of the objects is different to the estimated positions 16a to 19a of those objects.

The terms "coarse mode of operation" and "accurate mode of operation" refer to the accuracy in which the positions of objects relative to a user are rendered within a scene. Positions are "estimated" in the coarse mode of operation and "determined" in the accurate mode of operation, such that determined positions are generally more accurate (or rendered with more confidence) than estimated positions.

The scenes shown in FIG. 2 (indicated by the reference numerals 14a and 14b) may be, for example, a virtual reality, an augmented reality or a mixed reality scene.

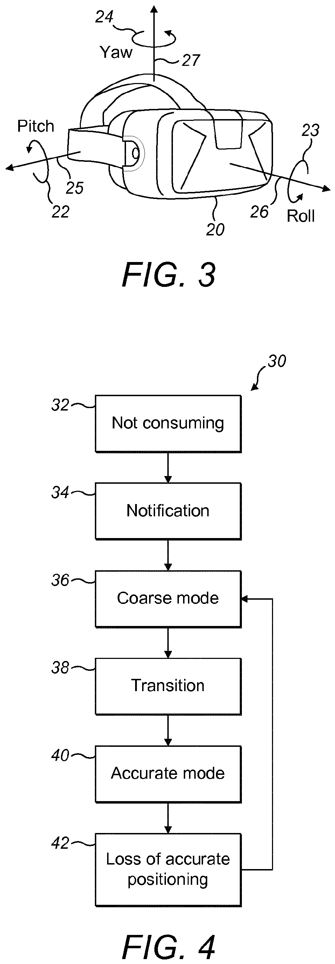

FIG. 3 is a schematic view of a headset, indicated generally by the reference numeral 20, for displaying visual data in accordance with an example embodiment.

The headset 20 may comprise alternative reality (AR) or mixed reality (MR) glasses, which may enable visual content, for example one or more virtual objects, to be projected or displayed on top of a see-through portion of the glasses.

The headset 20 receives the VR or MR content data in order to present a scene (such as the scene 14a or 14b described above) to a user (i.e. a wearer of the headset 20).

In some example embodiments, the spatial position and/or orientation of the user's head using the known six degrees of freedom (6DoF) method may be determined. As shown in FIG. 3, these include measurements of pitch 22, roll 23 and yaw 24 and also translational movement in Euclidean space along side-to-side, front-to-back and up- and-down axes 25, 26 and 27.

The headset 20 may be configured to display VR or MR content data to the user based on spatial position and/or the orientation of the headset 20. A detected change in spatial position and/or orientation, i.e. a form of movement, may result in a corresponding change in the visual data to reflect a position or orientation transformation of the user with reference to the space into which the visual data is projected. Thus, movement of the user relative to the space in which virtual objects are presented may result in an appropriate change in the positioning of those objects within the view of the user. This allows VR content data to be consumed with the user experiencing a 3-dimensional VR or MR environment.

Audio data may also be provided to headphones provided as part of the headset 20. The audio data may represent spatial audio source content. Spatial audio may refer to directional rendering of audio in the VR or MR space such that a detected change in the user's spatial position or in the orientation of their head may result in a corresponding change in the spatial audio rendering to reflect a transformation with reference to the space in which the spatial audio data is rendered.

FIG. 4 is a flow chart showing an algorithm, indicated generally by the reference numeral 30, in accordance with an example embodiment.

The algorithm 30 starts at operation 32 where no scene is being presented to the user (i.e. no volumetric content is being consumed). This may, for example, be because the user 12 is outside by the coarse and accurate zones (e.g. is within the first zone 2 described above).

When the user enters the coarse zone (e.g. the second zone 4), a notification may be provided informing the user that volumetric content (such as 6-DOF augmented reality content) is available. This is indicated in operation 34 of the algorithm 30. The availability of such content may be determined on the basis of position data obtained in a coarse mode of operation, for example from a global positioning system (GPS), a wi-fi based positioning systems or a three degrees of freedom (3-DOF) positioning method. In response to the notification received in operation 34, the user starts to consume the content in the coarse positioning mode (operation 36). For example, the user may put on headphones and/or augmented reality (AR) glasses or a headset such as the headset 20 described above for experiencing the content.

The scene 14a may be provided to the user in the operation 36. In the operation 36, the user is within a coarse position tracking zone (such as the second zone 4), as described above. In the event that the user enters a zone which supports accurate position tracking (such as the third zone 6), a transition state 38 is entered before the algorithm 30 moves to operation 40, where the user starts to consume the content in the accurate positioning mode. Thus, the scene 14b may be provided to the user in the operation 40. As used above, "coarse" and "accurate" tracking are relative terms. The position of the user is generally known more accurately (or known with more confidence) in an accurate tracking mode than in a coarse tracking mode.

As shown in the algorithm 30, in the event that accurate positioning is lost (operation 42), the algorithm 30 returns to operation 36, where the user consumes the content in the coarse positioning mode.

The transition (during operation 36) from the coarse mode of operation to the accurate mode of operation presents a number of challenges, as described further below.

It should be noted that not all operations of the algorithm 30 are essential to all embodiments of the invention. For example, the operations 32 and/or 34 may be omitted. Alternatively, or in addition, the operation 42 and the return to operation 36 may be omitted.

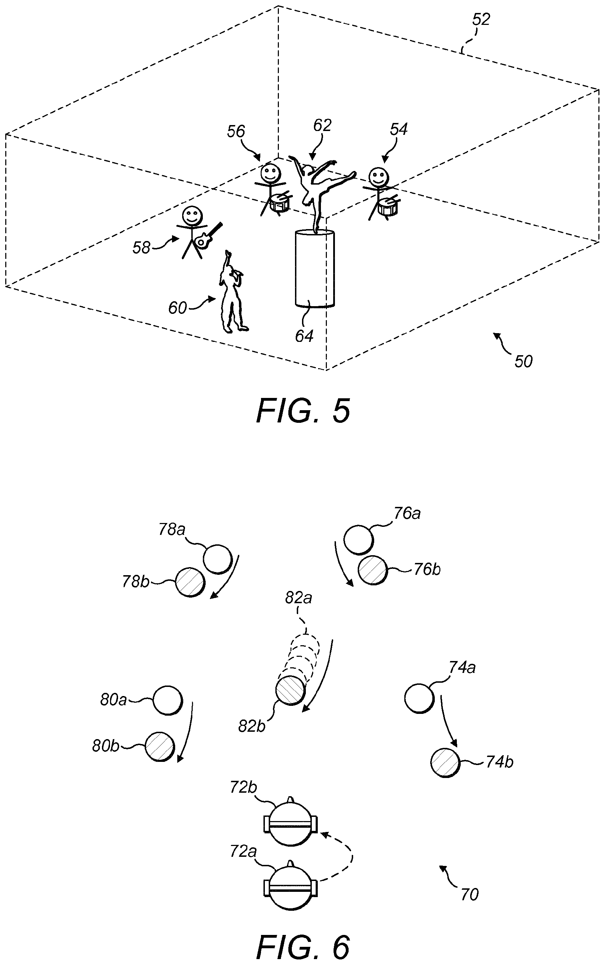

FIG. 5 is a block diagram of a scene, indicated generally by the reference numeral 50, in accordance with an example embodiment. The scene 50 is within a zone indicated by the reference numeral 52. Within the zone 52 may be a volume in which six degrees-of-freedom (6-DOF) positional data of a viewer is available.

The scene 50 is an audio-visual scene comprising a first object 54, a second object 56, a third object 58, a fourth object 60 and a fifth object 62. As shown in FIG. 5, the first and second objects 54 and 56 are drummers, the third object 58 is a guitarist, the fourth object 60 is a singer and the fifth object 62 is a dancer. The dancer 62 is positioned on a podium 64. The first to fifth objects are virtual objects that may be presented to a viewer in an augmented reality scene. The podium 64 is a physical object that can be seen by the viewer.

The first to fourth objects 54 to 60 are anchorless objected: the fifth object 62 is an anchored objects. In the context of this specification, an anchored object is an object that is associated with or tied to a physical feature of the scene (the podium 64 in this case) such that the absolute position of the anchored object is important. In the context of this specification, an anchorless object is an object that is either not tied to a physical objet within the scene or has a location relative to a location of the viewer of the augmented reality scene. Thus, the relative position of an anchorless object with a scene is more important that the absolute position of that object.

As described in detail below, when viewing a representation of the scene 50 in a coarse mode of operation, the first to fourth objects 54 to 60 can be presented within a virtual reality scene and the positions of those objects within the scene can be adjusted in the event of a change to an accurate mode of operation. The position of the fifth object 62 may present more difficulties, since an incorrect positioning of that object (due to inaccurate user position data) can result in the representation of that object being detached from the podium 64. A similar issue can arise when a visual representation is given of an object that can be heard by the user in the real world. If that object is presented in an incorrect position, then the visual display within the scene may not match the sounds that the user can hear.

FIG. 6 shows a representation, indicated generally by the reference numeral 70, of the scene 50 described above with reference to FIG. 5 in accordance with an example embodiment.

The scene 50 is being viewed by a viewer 72. The viewer 72 is initially in a first position 72a shown in FIG. 6, before moving to a second position 72b also shown in FIG. 6. Assume that, in the first position 72a, the scene is rendered to the viewer in a coarse mode of operation and in the second position 72b, the scene is rendered to the viewer in an accurate mode of operation.

In the coarse mode of operation (e.g. the operation 36 of the algorithm 30 described above), the first to fifth objects are rendered as images 74a, 76a, 78a, 80a and 82a. The images of the anchorless objects (images 74a, 76a, 78a and 80a) are rendered with full audio and/or visual attributes (and may, for example, be rendered including one or more of full colour visual rendering, full texture visual rendering, full opacity visual rendering and spatial audio). The image of the anchored object (the image 82a) is rendered with limited audio and visual attributes (and may, for example, be rendered including one or more of partially transparent visual rendering, ripple effect visual rendering, non-directional audio rendering and limited colour visual rendering).

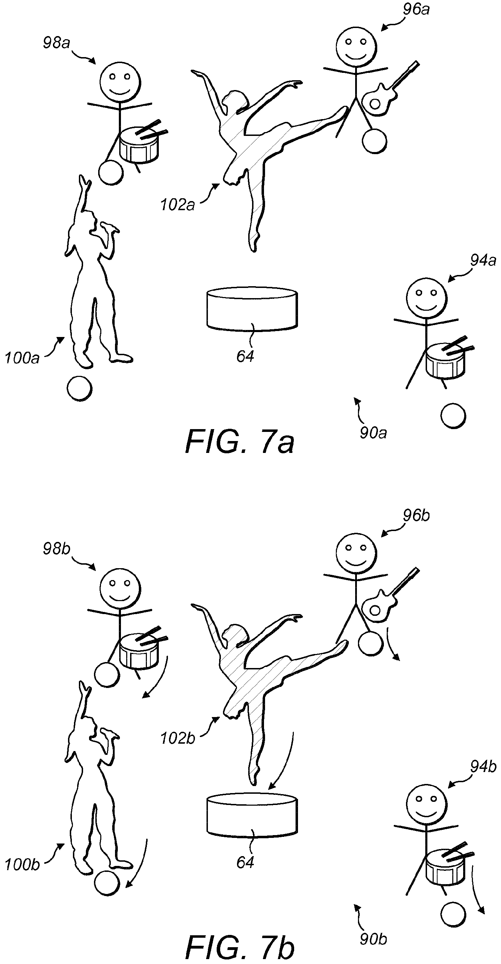

FIG. 7a shows an example output, indicated generally by the reference numeral 90a, in accordance with an example embodiment showing an example rendering of the system 50 in the coarse mode of operation. As shown in FIG. 7a, the first to fourth objects (the anchorless objects) of the scene 50 are rendered as first to fourth objects 94a, 96a, 98a and 100a. The anchorless objects are rendered as solid objects with full spatial audio (and are thereby rendered with full audio and visual attributes). The anchored object of the scene 50 is rendered as fifth object 102a. The fifth object 102a is rendered with partially transparent visual rendering and with non-directional audio rendering. The podium 64 (which is a physical object) is visible in the example output 90a.

In the accurate mode of operation (e.g. the operation 40 of the algorithm 30 described above), the first to fifth objects are rendered as images 74b, 76b, 78b, 80b and 82b (see FIG. 6). The podium 64 (which is a physical object) is always in the position 82b. In the accurate mode of operation, the anchorless objects (images 74a, 76a, 78a and 80a) and the anchored object (the image 82a) are all rendered with full audio and/or visual attributes (and may, for example, be rendered including one or more of full colour visual rendering, full texture visual rendering, full opacity visual rendering and spatial audio).

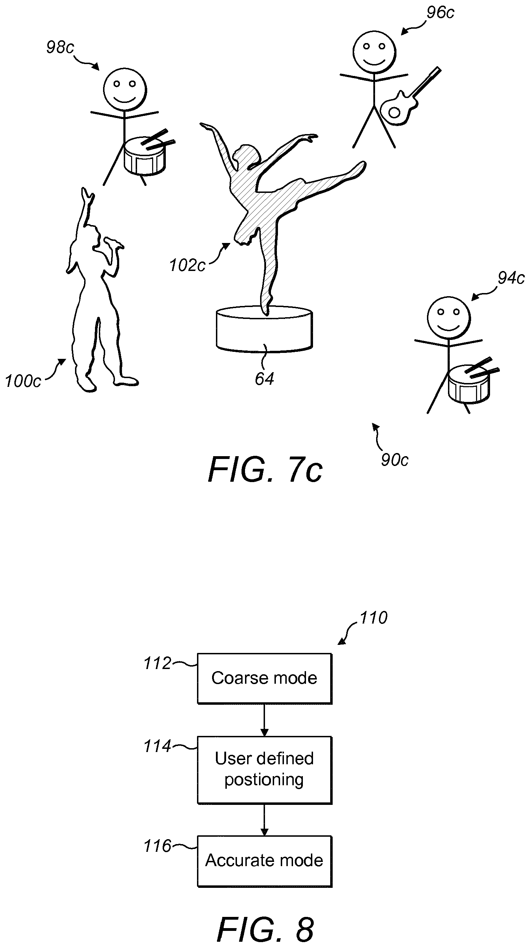

FIG. 7c show an example output, indicated generally by the reference numeral 90c, in accordance with an example embodiment showing an example rendering of the system 50 in the accurate mode of operation. As shown in FIG. 7c, the first to fourth objects (the anchorless objects) of the scene 50 are rendered as first to fourth objects 94c, 96c, 98c and 100c and the anchorless object of the scene 50 is rendered as fifth object 102c. The anchorless and anchored objects are all rendered as solid objects with full spatial audio (and are thereby rendered with full audio and visual attributes). The podium 64 (which is a physical object) is visible in the example output 90a. Of course, the quantity and nature of the anchored and anchorless objects can vary in different use cases; the examples described herein are provided by way of example only.

The transition between the coarse mode of operation and the accurate mode of operation (e.g. the operation 38 of the algorithm described above) is indicated by arrows in FIG. 6. As indicated by the arrows, the transition from the coarse mode of operation to the accurate mode of operation includes moving the objects from the estimated positions to the determined positions. In an example embodiment, the moving of the objects is implemented gradually, such that from the viewpoint of the viewer 72b, the objects drift towards the position determined in the accurate mode of operation. Moreover, in addition to moving, the anchored objects transition from having limited audio and/or visual attributes to having full audio and/or visual attributes.

As described above, the transition between coarse and accurate modes of operation may be triggered by a change in the mechanism by which the user position is determined. For example, a user may initially rely on a tracking system, such as global positioning system (GPS), to provide location information. Later, the user may start to wear a tracking enabled device, such as a head mounted device (HMD), which enables more accurate user positioning. Changing from GPS positioning to HMD positioning may trigger a change from a coarse mode of operation to an accurate mode of operation. Alternatively, a user may move from a first location in which only relatively inaccurate positioning systems are available to a second location in which more accurate positioning systems are available.

FIG. 7b show an example output, indicated generally by the reference numeral 90b, in accordance with an example embodiment showing an example rendering of the system 50 in the transition between the coarse mode of operation and the accurate mode of operation. As shown in FIG. 7b, the first to fourth objects (the anchorless objects) of the scene 50 are rendered as first to fourth objects 94b, 96b, 98b and 100b and the anchorless object of the scene 50 is rendered as fifth object 102b. The anchorless objects are all rendered as solid objects with full spatial audio (and are thereby rendered with full audio and visual attributes). The fifth object 102a transitions from a partially transparent visual rendering having non-directional audio rendering to a solid rendering with full spatial audio. The podium 64 (which is a physical object) is visible in the example output 90a.

As shown in FIG. 4, the algorithm 30 includes an optional operation 42 in which the loss of accurate position is detected, in which case there is a transition from an accurate mode of operation to a coarse mode of operation. This transition may be implemented by transitioning from the example output 90c shown in FIG. 7c to the example output 90a shown in FIG. 7a, for example by gradually moving the positions of the objects from the determined positions to the estimated positions and by transitioning any anchored objects from full audio and/or visual rendering to limited audio and/or visual rendering.

FIG. 8 is a flow chart showing an algorithm, indicated generally by the reference numeral 110, in accordance with an example embodiment. The algorithm 110 starts at operation 112 in which a coarse mode of operation is in operation. The operation 112 may be identical to the operation 36 described above with reference to the algorithm 30. An example output of the operation 112 is the output 90a described above with reference to FIG. 7a.

The algorithm 110 moves to operation 114 where a user-defined positioning operation is conducted. Following the user-defined positioning operation, the algorithm 110 may move to operation 116 in which an accurate mode of operation is operated. The operation 116 may be identical to the operation 40 described above with reference to the algorithm 30. An example output of the operation 116 is the output 90c described above with reference to FIG. 7c.

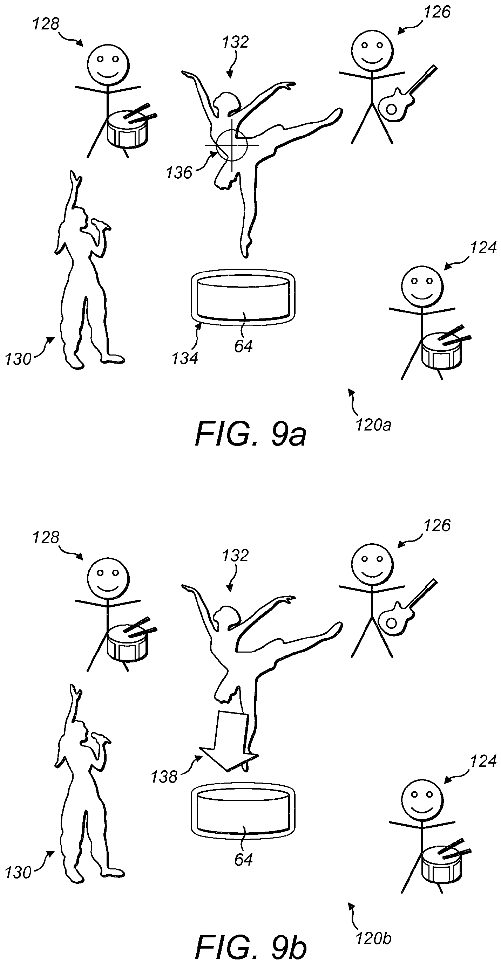

FIGS. 9a and 9b show example outputs demonstrating an example implementation of the user-defined positioning operation 114 in accordance with an example embodiment.

FIGS. 9a show an example output, indicated generally by the reference numeral 120a, showing an example rendering of the system 50 in the coarse mode of operation (e.g. during the operation 114 described above). As shown in FIG. 9a, the first to fourth objects (the anchorless objects) of the scene 50 are rendered as first to fourth objects 124, 126, 128 and 130. The anchorless objects are rendered as solid objects with full spatial audio (and are thereby rendered with full audio and visual attributes). The anchorless object of the scene 50 is rendered as fifth object 132. The fifth object 132 is rendered with partially transparent visual rendering and with non-directional audio rendering. The podium 64 (which is a physical object) is visible in the example output 90a. Thus, the output 120a is similar to the output 90a described above with reference to FIG. 7a.

The output 120a differs from the output 90a in that a user has selected the podium 64 (as indicated by the arrow 134) and the fifth object 132 (as indicated by the reference numeral 136). In an example embodiment, the selection of the podium 64 and the fifth object 132 results in the fifth object being moved to the podium. Note that the podium is a fixed point and so cannot be moved.

FIG. 9b shows an example output, indicated generally by the reference numeral 120b, The output 120b is identical to the output 120a described above, except that the fifth object 132 is being moved towards the podium 64 as discussed above (and indicated by the arrow 138).

The moving of the fifth object 132 to the podium implements the operation 114 of the algorithm 110 described above. Once complete, the output presented to the user is identical to the output 90c described above. Accordingly, the output can be treated as in an accurate mode of operation (as indicated in operation 116 of the algorithm 110).

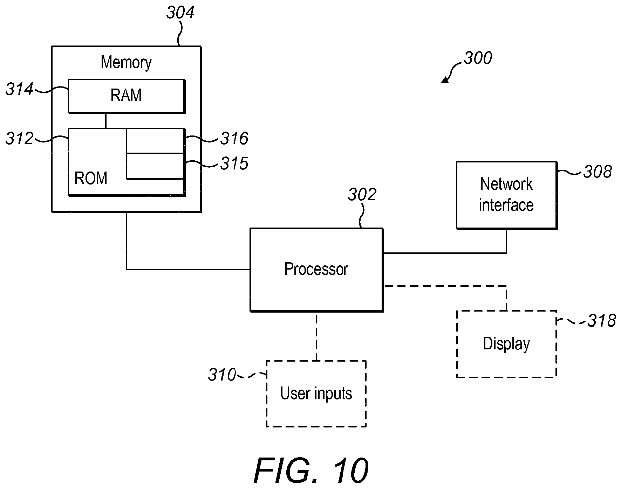

For completeness, Figure 10 is a schematic diagram of components of one or more of the modules described previously (e.g. implementing some or all of the operations of the algorithms 40 and 110 described above), which hereafter are referred to generically as processing systems 300. A processing system 300 may have a processor 302, a memory 304 closely coupled to the processor and comprised of a RAM 314 and ROM 312, and, optionally, user input 310 and a display 318. The processing system 300 may comprise one or more network interfaces 308 for connection to a network, e.g. a modem which may be wired or wireless.

The processor 302 is connected to each of the other components in order to control operation thereof.

The memory 304 may comprise a non-volatile memory, such as a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor implements aspects of the algorithms 30 and 110 described above.

The processor 302 may take any suitable form. For instance, it maybe a microcontroller, plural microcontrollers, a processor, or plural processors.

The processing system 300 may be a standalone computer, a server, a console, or a network thereof.

In some embodiments, the processing system 300 may also be associated with external software applications. These may be applications stored on a remote server device and may run partly or exclusively on the remote server device. These applications may be termed cloud-hosted applications. The processing system 300 may be in communication with the remote server device in order to utilize the software application stored there.

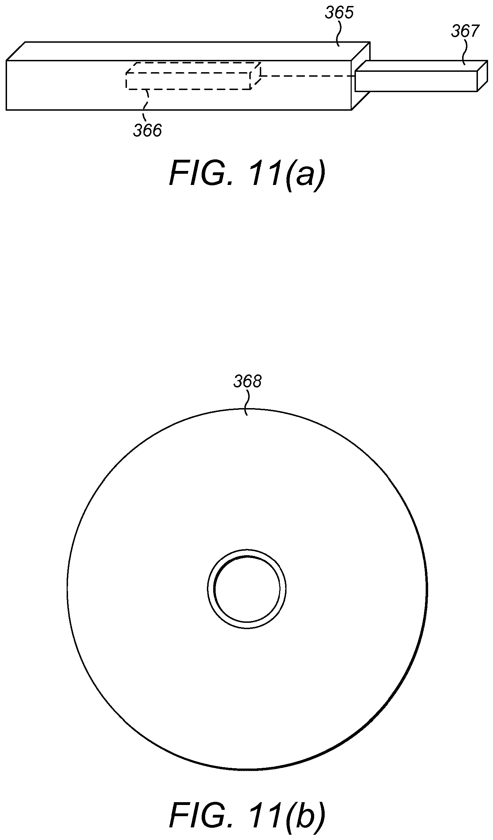

Figures 11a and 11b show tangible media, respectively a removable memory unit 365 and a compact disc (CD) 368, storing computer-readable code which when run by a computer may perform methods according to embodiments described above. The removable memory unit 365 may be a memory stick, e.g. a USB memory stick, having internal memory 366 storing the computer-readable code. The memory 366 may be accessed by a computer system via a connector 367. The CD 368 may be a CD-ROM or a DVD or similar. Other forms of tangible storage media may be used.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices and other devices. References to computer program, instructions, code etc. should be understood to express software for a programmable processor firmware such as the programmable content of a hardware device as instructions for a processor or configured or configuration settings for a fixed function device, gate array, programmable logic device, etc.

As used in this application, the term "circuitry" refers to all of the following: (a) hardware-only circuit implementations (such as implementations in only analogue and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a server, to perform various functions) and (c) to circuits, such as a microprocessor(s) or a portion of a microprocessor(s), that require software or firmware for operation, even if the software or firmware is not physically present.

If desired, the different functions discussed herein may be performed in a different order and/or concurrently with each other. Furthermore, if desired, one or more of the above-described functions may be optional or may be combined. Similarly, it will also be appreciated that the flow diagrams of FIGS. 4 and 8 are examples only and that various operations depicted therein may be omitted, reordered and/or combined.

## Claims

1. A head mounted computing apparatus for presenting virtual reality, mixed reality, or augmented reality content, the apparatus comprising:
means for rendering, to a user, one or more anchored virtual objects (62) within a scene, wherein, in a coarse mode of operation (36), at least some of the anchored virtual objects are rendered at estimated positions and with limited audio and/or visual attributes and, in an accurate mode of operation (40), the at least some anchored virtual objects are rendered at determined positions and with full audio and/or visual attributes, wherein determined positions are generally more accurate or known with more confidence than estimated positions; and
means for transitioning (38) from the coarse mode of operation (36) to the accurate mode of operation (40), including moving the at least some anchored virtual objects from the respective estimated positions to the respective determined positions and transitioning the at least some anchored virtual objects from objects having limited audio and/or visual attributes to objects having full audio and/or visual attributes, wherein the transition between coarse and accurate modes of operation is triggered by a change in a mechanism by which the user position is determined,
wherein the scene is a virtual reality, augmented reality or mixed reality scene.

2. An apparatus as claimed in claim 1, wherein each anchored virtual object (62) is associated with a feature (64) within the scene.

3. An apparatus as claimed in claim 1 or claim 2, wherein:
moving the at least some anchored virtual objects (62) from the respective estimated positions to the respective determined positions is implemented gradually; and/or
transitioning the at least some anchored virtual objects from objects having limited audio and/or visual attributes to objects having full audio and/or visual attributes is implemented gradually.

4. An apparatus as claimed in any one of claims 1 to 3, wherein:
limited audio and/or visual attributes includes one or more of: partially transparent visual rendering, ripple effect visual rendering, non-directional audio rendering and limited colour visual rendering; and/or
full audio and visual attributes includes one or more of: full colour visual rendering, full texture visual rendering, full opacity visual rendering and spatial audio rendering.

5. An apparatus as claimed in any one of the preceding claims, further comprising means for manually adjusting positions of one or more of said one or more anchored virtual objects.

6. An apparatus as claimed in any one of the preceding claims, further comprising means for rendering one or more unanchored virtual objects (54, 56, 58, 60) within the scene, wherein in the coarse mode of operation, at least some of the unanchored virtual objects are rendered at estimated positions and, in an accurate mode of operation, the at least some anchored virtual objects are rendered at determined positions.

7. An apparatus as claimed in claim 6, wherein the unanchored virtual objects (54, 56, 58. 60) are rendered with full audio and/or visual attributes in both the coarse and accurate modes of operation.

8. A computer-implemented method performed by an apparatus according to claim 1, the method comprising:
rendering, to a user, one or more anchored virtual objects (62) within a scene, wherein, in a coarse mode of operation (36), at least some of the anchored virtual objects are rendered at estimated positions and with limited audio and/or visual attributes and, in an accurate mode of operation (40), the at least some anchored virtual objects are rendered at determined positions and with full audio and/or visual attributes, wherein determined positions are generally more accurate or known with more confidence than estimated positions; and
transitioning (38) from the coarse mode of operation to the accurate mode of operation, including moving the at least some anchored virtual objects from the respective estimated positions to the respective determined positions and transitioning the at least some anchored virtual objects from objects having limited audio and/or visual attributes to objects having full audio and/or visual attributes, wherein the transition between coarse and accurate modes of operation is triggered by a change in a mechanism by which the user position is determined,
wherein the scene is a virtual reality, augmented reality or mixed reality scene.

9. A method as claimed in claim 8, wherein:
moving the at least some anchored virtual objects (62) from the respective estimated positions to the respective determined positions is implemented gradually; and/or
transitioning the at least some anchored virtual objects from objects having limited audio and/or visual attributes to objects having full audio and/or visual attributes is implemented gradually.

10. A method as claimed in claim 8 or claim 9, further comprising transitioning from the accurate mode of operation to the coarse mode of operation, the method further comprising:
gradually moving the anchored virtual objects from the respective determined positions to the respective estimated positions; and/or
gradually transitioning the anchored virtual objects from objects having full audio and/or visual attributes to objects having limited audio and/or visual attributes.

11. A method as claimed in any one of claims 8 to 10, further comprising manually adjusting positions of one or more of said one or more anchored virtual objects.

12. A method as claimed in any one of claims 8 to 11, further comprising rendering one or more unanchored virtual objects (54, 56, 58, 60) within the scene, wherein in the coarse mode of operation, at least some of the unanchored virtual objects are rendered at estimated positions and, in an accurate mode of operation, the at least some unanchored objects are rendered at determined positions.

13. A method as claimed in claim 12, wherein the unanchored virtual objects are rendered with full audio and/or visual attributes in both the coarse and accurate modes of operation.

14. A method as claimed in any one claims 8 to 13, wherein:
position data in the coarse mode of operation is obtained from a global positioning system positioning system, a wi-fi based positioning system and/or a three degrees-of-freedom based positioning system; and/or
position data in the accurate mode of operation is obtained from a head-mounted device based positioning system, an augmented reality glasses based positioning system and/or a six degrees-of-freedom based positioning system.

15. Computer-readable instructions which, when executed by a computingapparatus according to claim 1, cause the computing apparatus according to claim 1 to perform a method according to claim 8.

## Patentansprüche

1. Kopfmontierte Datenverarbeitungseinrichtung zum Präsentieren eines Inhalts der virtuellen Realitäts, der gemischten Realität oder der erweiterten Realität, wobei die Einrichtung Folgendes umfasst:
Mittel zum Rendern von einem oder mehreren verankerten virtuellen Objekten (62) in einer Szene für einen Benutzer, wobei mindestens einige der verankerten virtuellen Objekte in einem groben Betriebsmodus (36) in geschätzten Positionen und mit begrenzten Audio- und/oder visuellen Attributen gerendert werden und die mindestens einigen verankerten virtuellen Objekte in einem genauen Betriebsmodus (40) in bestimmten Positionen und mit vollständigen Audio- und/oder visuellen Attributen gerendert werden, wobei bestimmte Positionen im Allgemeinen genauer oder mit mehr Vertrauen bekannt sind als geschätzte Positionen; und
Mittel zum Übergehen (38) vom groben Betriebsmodus (36) zum genauen Betriebsmodus (40), was das Bewegen der mindestens einigen verankerten virtuellen Objekte von den jeweiligen geschätzten Positionen zu den jeweiligen bestimmten Positionen beinhaltet, und Übergehen der mindestens einigen verankerten virtuellen Objekte von Objekten mit begrenzten Audio- und/oder visuellen Attributen zu Objekten mit vollständigen Audio- und/oder visuellen Attributen, wobei der Übergang zwischen dem groben und dem genauen Betriebsmodus durch eine Änderung bei einem Mechanismus ausgelöst wird, durch den die Benutzerposition bestimmt wird,
wobei die Szene eine Szene der virtuellen Realität, der erweiterten Realität oder der gemischten Realität ist.

2. Einrichtung nach Anspruch 1, wobei jedes verankerte virtuelle Objekt (62) mit einem Merkmal (64) in der Szene verknüpft ist.

3. Einrichtung nach Anspruch 1 oder Anspruch 2, wobei:
das Bewegen der mindestens einigen verankerten virtuellen Objekte (62) von den jeweiligen geschätzten Positionen zu den jeweiligen bestimmten Positionen allmählich implementiert wird; und/oder
das Übergehen der mindestens einigen verankerten virtuellen Objekte von Objekten mit begrenzten Audio- und/oder visuellen Attributen zu Objekten mit vollständigen Audio- und/oder visuellen Attributen allmählich implementiert wird.

4. Einrichtung nach einem der Ansprüche 1 bis 3, wobei:
begrenzte Audio- und/oder visuelle Attribute eines oder mehreres von Folgendem beinhalten: teilweise transparentes visuelles Rendern, visuelles Rendern mit Welligkeitseffekt, Rendern von nicht gerichtetem Audio und visuelles Rendern mit begrenzten Farben; und/oder
vollständige Audio- und visuelle Attribute eines oder mehreres von Folgendem beinhalten: visuelles Rendern mit vollständigen Farben, visuelles Rendern mit vollständiger Textur, visuelles Rendern mit vollständiger Undurchsichtigkeit und Rendern von räumlichem Audio.

5. Einrichtung nach einem der vorhergehenden Ansprüche, die ferner Mittel zum manuellen Anpassen von Positionen von einem oder mehreren des einen oder der mehreren verankerten virtuellen Objekte umfasst.

6. Einrichtung nach einem der vorhergehenden Ansprüche, die ferner Mittel zum Rendern von einem oder mehreren nicht verankerten virtuellen Objekten (54, 56, 58, 60) in der Szene umfasst, wobei mindestens einige der nicht verankerten virtuellen Objekte im groben Betriebsmodus in geschätzten Positionen gerendert werden und die mindestens einigen verankerten virtuellen Objekte in einem genauen Betriebsmodus in bestimmten Positionen gerendert werden.

7. Einrichtung nach Anspruch 6, wobei die nicht verankerten virtuellen Objekte (54, 56, 58, 60) sowohl im groben als auch im genauen Betriebsmodus mit vollständigen Audio- und/oder visuellen Attributen gerendert werden.

8. Computerimplementiertes Verfahren, das von einer Einrichtung gemäß Anspruch 1 durchgeführt wird, wobei das Verfahren Folgendes umfasst:
Rendern von einem oder mehreren verankerten virtuellen Objekten (62) in einer Szene für einen Benutzer, wobei mindestens einige der verankerten virtuellen Objekte in einem groben Betriebsmodus (36) in geschätzten Positionen und mit begrenzten Audio- und/oder visuellen Attributen gerendert werden und die mindestens einigen verankerten virtuellen Objekte in einem genauen Betriebsmodus (40) in bestimmten Positionen und mit vollständigen Audio- und/oder visuellen Attributen gerendert werden, wobei bestimmte Positionen im Allgemeinen genauer oder mit mehr Vertrauen bekannt sind als geschätzte Positionen; und
Übergehen (38) vom groben Betriebsmodus zum genauen Betriebsmodus, was das Bewegen der mindestens einigen verankerten virtuellen Objekte von den jeweiligen geschätzten Positionen zu den jeweiligen bestimmten Positionen beinhaltet, und Übergehen der mindestens einigen verankerten virtuellen Objekte von Objekten mit begrenzten Audio- und/oder visuellen Attributen zu Objekten mit vollständigen Audio- und/oder visuellen Attributen, wobei der Übergang zwischen dem groben und dem genauen Betriebsmodus durch eine Änderung bei einem Mechanismus ausgelöst wird, durch den die Benutzerposition bestimmt wird,
wobei die Szene eine Szene der virtuellen Realität, der erweiterten Realität oder der gemischten Realität ist.

9. Verfahren nach Anspruch 8, wobei:
das Bewegen der mindestens einigen verankerten virtuellen Objekte (62) von den jeweiligen geschätzten Positionen zu den jeweiligen bestimmten Positionen allmählich implementiert wird; und/oder
das Übergehen der mindestens einigen verankerten virtuellen Objekte von Objekten mit begrenzten Audio- und/oder visuellen Attributen zu Objekten mit vollständigen Audio- und/oder visuellen Attributen allmählich implementiert wird.

10. Verfahren nach Anspruch 8 oder Anspruch 9, das ferner das Übergehen vom genauen Betriebsmodus zum groben Betriebsmodus umfasst, wobei das Verfahren ferner Folgendes umfasst:
allmähliches Bewegen der verankerten virtuellen Objekte von den jeweiligen bestimmten Positionen zu den jeweiligen geschätzten Positionen; und/oder
allmähliches Übergehen der verankerten virtuellen Objekte von Objekten mit vollständigen Audio- und/oder visuellen Attributen zu Objekten mit begrenzten Audio- und/oder visuellen Attributen.

11. Verfahren nach einem der Ansprüche 8 bis 10, das ferner das manuellen Anpassen von Positionen von einem oder mehreren des einen oder der mehreren verankerten virtuellen Objekte umfasst.

12. Verfahren nach einem der Ansprüche 8 bis 11, das ferner das Rendern von einem oder mehreren nicht verankerten virtuellen Objekten (54, 56, 58, 60) in der Szene umfasst, wobei mindestens einige der nicht verankerten virtuellen Objekte im groben Betriebsmodus in geschätzten Positionen gerendert werden und die mindestens einigen nicht verankerten virtuellen Objekte in einem genauen Betriebsmodus in bestimmten Positionen gerendert werden.

13. Verfahren nach Anspruch 12, wobei die nicht verankerten virtuellen Objekte sowohl im groben als auch im genauen Betriebsmodus mit vollständigen Audio- und/oder visuellen Attributen gerendert werden.

14. Verfahren nach einem der Ansprüche 8 bis 13, wobei:
Positionsdaten im groben Betriebsmodus von einem globalen Positionsbestimmungssystem Positionsbestimmungssystem, einem Positionsbestimmungssystem auf Wi-Fi-Basis und/oder einem Positionsbestimmungssystem auf Basis von drei Freiheitsgraden erhalten werden; und/oder
Positionsdaten im genauen Betriebsmodus von einem Positionsbestimmungssystem auf Basis einer kopfmontierten Vorrichtung, einem Positionsbestimmungssystem auf Basis einer Brille für die erweiterte Realität und/oder einem Positionsbestimmungssystem auf Basis von sechs Freiheitsgraden erhalten werden.

15. Computerlesbare Anweisungen, die, wenn sie von einer Datenverarbeitungseinrichtung gemäß Anspruch 1 ausgeführt werden, die Datenverarbeitungseinrichtung gemäß Anspruch 1 veranlassen, ein Verfahren gemäß Anspruch 8 durchzuführen.

## Revendications

1. Appareil informatique en casque pour présenter un contenu de réalité virtuelle, de réalité mixte, ou de réalité augmentée, l'appareil comprenant :
des moyens pour rendre à un utilisateur un ou plusieurs objets virtuels ancrés (62) dans une scène, dans lequel, dans un mode de fonctionnement grossier (36), au moins certains des objets virtuels ancrés sont rendus à des positions estimées et avec des attributs audio et/ou visuels limités, et dans un mode de fonctionnement précis (40), ces objets virtuels ancrés sont rendus à des positions déterminées et avec des attributs audio et/ou visuels complets, dans lequel les positions déterminées sont généralement plus précises ou connues avec plus de confiance que les positions estimées ; et
des moyens pour passer (38) du mode de fonctionnement grossier (36) au mode de fonctionnement précis (40), comportant le déplacement de ces objets virtuels ancrés des positions estimées respectives aux positions déterminées respectives, et pour faire passer ces objets virtuels ancrés d'objets ayant des attributs audio et/ou visuels limités à des objets ayant audio et/ou visuels complets, dans lequel le passage entre les modes de fonctionnement grossier et précis est déclenché par la modification d'un mécanisme par lequel la position de l'utilisateur est déterminée,
dans lequel la scène est une réalité virtuelle, une réalité augmentée ou une réalité mixte scène.

2. Appareil selon la revendication 1, dans lequel chaque objet virtuel ancré (62) est associé à un élément (64) dans la scène.

3. Appareil selon la revendication 1 ou la revendication 2, dans lequel :
le déplacement de ces objets virtuels ancrés (62) des positions estimées respectives aux positions déterminées respectives est mis en oeuvre progressivement ; et/ou
le passage de ces objets virtuels ancrés d'objets ayant des attributs audio et/ou visuels limités à des objets ayant audio et/ou visuels complets est mis en oeuvre progressivement.

4. Appareil selon l'une des revendications 1 à 3, dans lequel :
les attributs audio et/ou visuels limités comportent un ou plusieurs parmi : un rendu visuel partiellement transparent, un rendu visuel à effet d'ondulation, un rendu audio non directionnel et un rendu visuel à couleurs limitées ; et/ou
les attributs audio et visuels complets comportent un ou plusieurs parmi : un rendu visuel pleine couleur, un rendu visuel pleine texture, un rendu visuel pleine opacité et un rendu audio spatial.

5. Appareil selon l'une quelconque des revendications précédentes, comprenant en outre des moyens pour régler manuellement les positions d'un ou plusieurs desdits un ou plusieurs objets virtuels ancrés.

6. Appareil selon l'une quelconque des revendications précédentes, comprenant en outre des moyens pour rendre un ou plusieurs objets virtuels non ancrés (54, 56, 58, 60) dans la scène, dans lequel en mode de fonctionnement grossier, au moins certains des objets virtuels non ancrés sont rendus à des positions estimées, et en mode de fonctionnement précis, ces objets virtuels ancrés sont rendus à des positions déterminées.

7. Appareil selon la revendication 6, dans lequel les objets virtuels non ancrés (54, 56, 58, 60) sont rendus avec des attributs audio et/ou visuels complets dans les deux modes de fonctionnement grossier et précis.

8. Procédé mis en oeuvre par ordinateur, effectué par un appareil selon la revendication 1, le procédé comprenant :
le rendu à un utilisateur d'un ou plusieurs objets virtuels ancrés (62) dans une scène, dans lequel, dans un mode de fonctionnement grossier (36), au moins certains des objets virtuels ancrés sont rendus à des positions estimées et avec des attributs audio et/ou visuels limités, et dans un mode de fonctionnement précis (40), ces objets virtuels ancrés sont rendus à des positions déterminées et avec des attributs audio et/ou visuels complets, dans lequel les positions déterminées sont généralement plus précises ou connues avec plus de confiance que les positions estimées ; et
le passage (38) du mode de fonctionnement grossier au mode de fonctionnement précis, comportant le déplacement ces objets virtuels ancrés des positions estimées respectives aux positions déterminées respectives, et le passage de ces objets virtuels ancrés d'objets ayant des attributs audio et/ou visuels limités à des objets ayant audio et/ou visuels complets, dans lequel le passage entre les modes de fonctionnement grossier et précis est déclenché par la modification d'un mécanisme par lequel la position de l'utilisateur est déterminée,
dans lequel la scène est une réalité virtuelle, une réalité augmentée ou une réalité mixte scène.

9. Procédé selon la revendication 8, dans lequel :
le déplacement de ces objets virtuels ancrés (62) des positions estimées respectives aux positions déterminées respectives est mis en oeuvre progressivement ; et/ou
le passage de ces objets virtuels ancrés d'objets ayant des attributs audio et/ou visuels limités à des objets ayant audio et/ou visuels complets est mis en oeuvre progressivement.

10. Procédé selon la revendication 8 ou la revendication 9, comprenant en outre le passage du mode de fonctionnement précis au mode de fonctionnement grossier, le procédé comprenant en outre :
le déplacement progressif des objets virtuels ancrés des positions déterminées respectives aux positions estimées respectives ; et/ou
le déplacement progressif des objets virtuels ancrés d'objets ayant des attributs audio et/ou visuels complets à des objets ayant des attributs audio et/ou visuels limités.

11. Procédé selon l'une des revendications 8 à 10, comprenant en outre le réglage manuel des positions d'un ou plusieurs desdits un ou plusieurs objets virtuels ancrés.

12. Procédé selon l'une des revendications 8 à 11, comprenant en outre le rendu d'un ou plusieurs objets virtuels non ancrés (54, 56, 58, 60) dans la scène, dans lequel en mode de fonctionnement grossier, au moins certains des objets virtuels non ancrés sont rendus à des positions estimées, et en mode de fonctionnement précis, ces objets non ancrés sont rendus à des positions estimées.

13. Procédé selon la revendication 12, dans lequel les objets virtuels non ancrés sont rendus avec des attributs audio et/ou visuels complets dans les deux modes de fonctionnement grossier et précis.

14. Procédé selon l'une des revendications 8 à 13, dans lequel :
des données de position en mode de fonctionnement grossier sont obtenues à partir d'un système mondial de localisation système de localisation, d'un système de localisation basé sur le Wifi et/ou d'un système de localisation basé sur trois degrés de liberté ; et/ or
des données de position en mode de fonctionnement précis sont obtenues à partir d'un système de localisation basé sur un casque à réalité virtuelle, d'un système de localisation basé sur des lunettes de réalité augmentée et/ou d'un système de localisation basé sur six degrés de liberté.

15. Instructions lisibles par ordinateur qui, lorsqu'elles sont exécutées par un appareil informatique selon la revendication 1, amènent l'appareil informatique selon la revendication 1 à effectuer un procédé selon la revendication 8.
